# EUROPEAN PATENT APPLICATION

(11) **EP 0 749 690 A1**
(43) Date of publication of application: **27.12.1996**
(21) Application number: 95201687.1
(22) Date of filing: 22.06.1995
(51) Int. Cl.: A21D 6/00, A21D 13/08, A21D 13/00, A21D 2/18, A21D 2/26

(54) **Heat-settable, frozen bakery dough systems**

(71) Applicant: UNILEVER N.V., NL-3000 DK Rotterdam (NL)
(72) Inventor: van der Beek, Marius Molco N.V., B-2630 Aartselaar, Antwerp (BE); Sanders, Johannes Cornelis, 3137 AJ Vlaardingen (NL); Hemelaar, Maria Johanna A.T., 3037 LJ Rotterdam (NL)

(57) **Abstract**

1. The invention concerns ready-to-bake, heat settable frozen bakery dough system, comprising:
   80 - 99% natural flour
   20 - 1% artificial flour
   the latter consisting of:
   30 - 70% of a protein
   70 - 30% of a modified starch,
   which dough system is provided with a frozen aqueous layer.

## Description

In our co-pending European patent applications, nrs. PCT/EP 94/04165; EP 94,202,776,4 and EP 94,202,775,6 we have disclosed ready-to-bake-frozen bakery dough systems. These dough systems can be used for bakery purposes, wherein a preproofing is no longer necessary, while after baking of the frozen dough system baked products are obtained with quite acceptable specific volume and ovenspring. Examples of such dough-systems are laminated dough-systems (e.g. croissants), brioche dough-systems and dough-systems for French bread and tin-breads.
The invention in these prior applications is based upon the use of a novel flour-composition. This novel flour is composed of 80-99 wt% of a natural flour and 20-1 wt% of an artificial flour. The latter component consisting of 30-70 wt% of a protein, in particular a gelatine relating compound and 70-30 wt% of a modified starch, in particular a cross linked starch.

Although the specific volumes of the baked products obtained after baking, in particular for the laminated dough-systems were very acceptable, we tried to find ways to improve this specific volume further. This effort has led to our new invention. According to our new invention we found a ready to bake, heat settable, frozen bakery dough system, such as laminated dough, brioche dough or bread dough, comprising a flour component and one or more leaveners, wherein the flour-component is composed of:
80-99 wt% of natural flour and
20- 1 wt% artificial flour,
which artificial flour consists of:
30-70 wt% of a protein, in particular a gelatin-relating compound, and
70-30 wt% of a modified starch
wherein the frozen bakery dough-system is provided with a frozen aqueous layer, that preferably contains a thickener and/or a gelling agent and/or a fat-component.

The gelatin relating compound is in fact the same as disclosed in our co-pending applications and is therefore selected from the group consisting of: gelatin with a bloom rate of 50-400; non gelling gelatin with a bloom rate of 0-50; hydrolysed gelatin and gelatin precursors.

The modified starch component is also the same component as disclosed in our earlier applications. The starch-component of our artificial flour must be a modified starch. Preferred modified starches are the heat-stable modified starches, in particular the cross-linked starches. A typical example being a cross-linked waxy maize starch, this starch can either be pregelatinised or not. Suitable modified starches can be selected from the following group (although not restricted to this group) Ultratex-2, Instant Clearjel, Pureflo, Thermflo, National 780188, Firmtex, Hiflo, National Frigex, National Frigex HV, National Frigex L.V.; Purity VL, Collflo 67, Purity HPC, Thermtex (all from National Starch); Clearam CH-30 (from Roquette) and from Avebe the Farinex-type products: VA 70; VA 100T; CAX;TK-1; VA 70 C or CA. Preferred modified starches are derived from waxymaize or from tapioca.

Although we can use water only for the production of the frozen aqueous layer on our products, we found that it is advantageous to apply a frozen aqueous layer, containing a thickener and/or a gelling agent and/or a fat-component. In this way problems with viscosity and consequently with losses of aqueous layer during the forming of the frozen aqueous layer on our products can be avoided. A further advantage of the use of these viscous aqueous layers is, that dripping of the layers during baking of the products is less.
It was found that the aqueous layer can have any viscosity. However higher viscosities led to less dripping. Very beneficial was the use of aqueous layers that had a higher viscosity at higher temperatures.
Thickeners and/or gelling agents that can be applied in the frozen aqueous layer can be selected from the group, consisting of carbohydrates, proteins and flours.
Examples being: pregelatinised flour; gums, such as xanthan gum, cmc, guar-gum and alginates or proteins, such as caseinates or the gelatin-relating compounds mentioned before.
The concentration of thickener in the frozen aqueous layer depends on the type of thickener. It is also possible to apply fat-containing emulsions, such as spreads or roux for this purpose.

The frozen aqueous layer, present in our products will amount to 0.2 to 10.0 g per 60 g dough, being equivalent with a layer thickness of 0.03 to 2.0 mm.

As is stated before we can apply the frozen aqueous layer on all ready-to-bake frozen dough systems, which have been disclosed in our previous patent-applications.

In the laminated dough-systems the doughs and laminate can have the composition as disclosed in PCT/EP 94/04165. This means that the dough-component comprises our flour-component and (on flour) 45-70 wt% of water; 5-10 wt% of yeast and 0.1-4.0 wt% of emulsifier.

Although any emulsifier can be applied, we found that suitable emulsifiers are mono- and diglycerides; acetic, lactic, citric, tartaric and diacetyl tartaric acid esters of mono- and diglycerides; polyglycerol esters; propylene glycol esters; stearoyl-2-lactylic esters; sorbitan esters and others. We found that a very beneficial effect on product performance is obtained, when the emulsifier comprises
- a DATA -ester, that provides baking performance to the dough, or
- a lecithin, or
- mono fatty acid esters from sucrose, wherein the fatty acids have a chain length of 12-20 C-atoms, or
- mixtures thereof.
The DATA-ester and the mixture with the lecithin provide in particular improved appearance to the baked products. Very suitable DATA-esters are those, that have a low saponification value (sap. value < 450).

The lecithin can be any known sort of lecithin, however, it is preferred to use lecithins that have a high phospholipid-content.

Other dough-improving ingredients, such as sugar, fat, enzymes, in particular xylanase and/or glucoamylase, and/or transglutaminase and/or amylase, ascorbic acid and reducing agents, such as cysteine can also be incorporated in the dough. The amounts are effective amounts, which can be derived from the prior art. Ascorbic acid is used in slightly higher amounts of more than 100 ppm (on flour).

Very suitable laminated doughs, with very good product-performance are obtained, when we apply a specific ratio between fat-content (in % on flour) and number of fat-layers. In fact we found that ratio's of 0.66 - 1.8 lead to very good results.

The natural flour component of our doughs can be any flour, applicable according to the prior art in laminated dough systems. Preferred flours are strong flours, in particular the flours with at least 15 wt% protein on dry matter are preferred.

Our new laminated dough systems can also be filled with fillings, such as custards, marmalades, fruit, ham, cheese or chocolate. However, in order to avoid problems with the readiness of the baked products, it is suitable to apply fillings with a reduced water-content and/or to add a food-grade waterbinder to the filling. Very convenient fillings comprise custard-fillings with a water-content of 50-65 wt%, marmalade-fillings with a water-content of 45-70 wt%, while these fillings also can contain 2-15 wt% of a waterbinder, selected from the group, consisting of gelatin, egg-white powder, starches, modified starches, flour, carrageenan, guar gum. Custard-fillings will contain preferably 9-15 wt% of these waterbinders, while the marmalades preferably will contain 2-8 wt% thereof. The filling-material can be applied as a pourable filling or as a frozen filling, in particular in the form of a frozen stick.

In the brioche dough systems the dough can have the composition as disclosed in EP 94,202,776,4. This means that the dough can consist of:
- a flour-component, and (on flour):
   40 - 70 wt% of water
   10 - 30 wt% of fat
   2 - 15 wt% of whole egg
   3 - 10 wt% of yeast
   0.1 - 4.0 wt% of emulsifier
Any emulsifier can be applied, however we found that a beneficial effect on product performance is obtained, when the emulsifier comprises
- a DATA -ester, that provides baking performance to the dough, or
- a lecithin, or
- a mono fatty acid ester of sucrose, preferably having
   12-20 C-atoms, or
- mixtures thereof.
The DATA-ester and the mixture with the lecithin provide again improved appearance to the baked products. The most suitable DATA-esters are those, that have a low saponification value (sap. value < 450).

The lecithin again can be any known sort of lecithin, however, it is preferred to use lecithins that have a high phospholipid-content.

Other dough-improving ingredients, such as sugar, enzymes, in particular xylanase, amyloglucosydase and/or amylase, ascorbic acid and reducing agents, such as cysteine can also be incorporated in the brioche dough. The amounts are effective amounts, which can be derived from the prior art. Ascorbic acid is used in slightly higher amounts of more than 25 ppm (on flour), preferably more than 75 ppm.

It was found, that any fat, known as component for brioche-dough can be applied. However, we prefer to apply fats, derived from margarine with a hardness C according to Haighton (at 20°C) of at least 500.

The natural flour component of our brioche doughs can also be any flour, applicable according to the prior art in brioche dough systems. Preferred flours are strong flours, in particular the flours with at least 15 wt% protein on dry matter are preferred.

In the bread dough systems the dough can have the composition as disclosed in EP 94,202,775,6. This means that the dough can consist of:
- a flour-component, and (on flour):
   30 - 70 wt% of water
   0 - 10 wt% of fat
   0 - 3 wt% of milk protein
   0.5 - 8 wt% of yeast
   0.1 - 4 wt% of emulsifier
   0 - 10 wt% of sugar
Here too any emulsifier can be applied, we found that a beneficial effect on product performance is obtained, when the emulsifier comprises
- a DATA -ester, that provides baking performance to the dough, or
- a lecithin, or
- a mono fatty acid ester of sucrose, preferably having 12-20 C-atoms, or
- mixtures thereof.
The DATA-ester and the mixture with the lecithin again provide improved appearance to the baked products. Here too the most suitable DATA-esters are those, that have a low saponification value (sap. value < 450).

The lecithin again can be any known sort of lecithin, however, it is preferred to use lecithins that have a high phospholipid-content.

Other dough-improving ingredients, such as enzymes, in particular xylanase, amyloglucosydase and/or amylase, ascorbic acid and reducing agents, such as cysteine can also be incorporated in this dough. The amounts are effective amounts, which can be derived from the prior art. Ascorbic acid is used in slightly higher amounts of more than 25 ppm (on flour), preferably more than 75 ppm.

It was found, that any fat, known as component for enriched bread dough can be applied. However, we prefer to apply fats, derived from margarine with a hardness C according to Haighton (at 20°C) of at least 500.

The natural flour component of our doughs can be any flour, applicable according to the prior art in bread dough systems. Preferred flours are strong flours, in particular the flours with at least 11 wt% protein on dry matter are preferred.

Our new products can be made by either providing the frozen dough system with a aqueous layer or by providing a aqueous layer to a non-frozen dough-system and freezing of the wetted products obtained.
So our invention also concerns a process for the preparation of ready-to-bake, frozen bakery dough systems, provided with a frozen aqueous layer by preparing a frozen, ready-to-bake bakery dough system with the composition, mentioned in Claims 1 - 4, after which this frozen dough system is provided with a frozen aqueous layer, optionally containing a thickener and/or a gelling agent and/or a fat-component by spraying or brushing of water, optionally containing the thickener and/or a gelling agent and/or a fat-component onto the frozen bakery dough system, or by dipping of the frozen bakery dough system, into water, optionally containing an amount of thickener and/or a gelling agent and/or a fat-component.

However our invention also concerns a process for the preparation of ready-to-bake frozen bakery dough systems, provided with a frozen aqueous layer, optionally containing a thickener, and/or a gelling agent and/or a fat-component by making a ready-to-bake bakery dough system with the composition, mentioned in claims 1-4, and spraying or brushing of water, optionally containing a thickener and/or a gelling agent and/or a fat-component onto the dough-system obtained, or dipping of the dough-system in water, optionally containing a thickener and/or a gelling agent and/or a fat-component and quick freezing of the wetted dough-system so obtained.

In fact it was found that the highest specific volumes were obtained, when the aqueous layer was formed on the dough system before freezing.

### EXAMPLES

### Example 1

Croissants dough pieces of 60 g were prepared according to procedure D described in patent application PCT/EP 94/04165.
Before entering the freezing process, the croissants were sprayed with a fine mist of water in such a way that their weight increased with about 1g.

After freezing these products were baked in a convection oven at 160°C for 28 minutes. Steam was applied in the early stage of baking. Similar products, not sprayed with water, were also baked in the same way.
The specific volumes of the baked products were respectively: 5.8 and 5.0.

### Example 2 - 6

### Dough preparation:

Bread dough was made according to the procedure described in patent application nr. EP 94.202.775.6. and shaped into rolls weighing 50 gram. The products were frozen immediately to -20 C
A batter was prepared from the thickener component(s) with water by mixing with an Ultraturrax. The batter was kept at room temperature.

### Coating of the rolls:

The frozen, rolls were dipped totally into the batter, except for the bottom, resulting in these examples in a coating weight of 5 grams.
After freezing, the rolls were baked in a convection oven at 175 C for 24 minutes. Steam was applied in the early stage of the baking process. Similar products, preprared from the same dough, were baked in the same way.
The specific volumes of the rolls without coating (blanc) was 5 ml/gram.

| **example** | **batter composition** | **specific volume (ml/g)** |
|---|---|---|
| **blanc** | - | 5 |
| **2** | Wheat Farigel H1 16.6%, 0.1 % Keltrol RD, 83.3 % water | 5.2 |
| **3** | Wheat Farigel H1 25 %, 0.1 % Keltrol RD, 74.9 % water | 5.3 |
| **4** | CMC 7 HF 1.95 %, 98.05 % water | 5.9 |
| **5** | Wheat Farigel 680 16.6%, 83.4 % water | 5.4 |
| **6** | Wheat starch 25 %, 0.1 % Keltrol RD, 74.9 % water | 5.8 |
| Wheat Farigel H1 and Wheat Farigel F680 ex. Westhove Keltrol RD ex Kelco Wheat starch ex. Latenstein CMC 7HF ex Aqualon. | | |

## Claims

1. Ready-to-bake, heat settable, frozen bakery dough system, such as laminated dough, brioche dough or bread dough, comprising a flour component and one or more leaveners, wherein the flour-component is composed of:
80-99 wt% of natural flour and
20- 1 wt% artificial flour,
which artificial flour consists of:
30-70 wt% of a protein, in particular a gelatin-relating compound, and
70-30 wt% of a modified starch
wherein the frozen bakery dough-system is provided with a frozen aqueous layer, that preferably contains a thickener and/or a gelling agent and/or a fat-component.

2. Ready-to-bake dough system according to Claim 1, wherein the gelating relating compound is selected from the group consisting of: gelatin with a bloom rate of 50-400; non gelling gelatin with a bloom rate of 0-50; hydrolysed gelatin and gelatin precursors.

3. Ready-to bake dough-sysem according to Claims 1 and 2, wherein the modified starch is a cross linked starch, in particular a cross linked waxy maize starch.

4. Ready-to-bake dough-system according to Claims 1 - 3, wherein the thickener and/or gelling agent, present in the frozen aqueous layer is selected from the group, consisting of: proteins, and carbohydrates

5. Ready-to-bake dough system according to Claim 4, wherein the thickener and/or gelling agent is selected from the group consisting of: xanthan gum; guar gum; CMC; alginates, pregelatinized flour and gelatin relating compounds.

6. Ready-to-bake dough system according to Claims 1 - 5, wherein the frozen aqueous layer is present in an amount of 0.2 to 10.0 per 60 g dough.

7. Use of a frozen aqueous layer in ready-to-bake, heat settable, frozen bakery dough systems, wherein a frozen aqueous layer, optionally containing a thickener and/or gelling agent and/or fat-component is applied for the increase of the specific volume during baking of a frozen, ready-to-bake bakery dough-system with the composition as mentioned in Claims 1 - 4.

8. Process for the preparation of ready-to-bake, frozen bakery dough systems, provided with a frozen aqueous layer by preparing a frozen, ready-to-bake bakery dough system with the composition, mentioned in Claims 1 - 4, after which this frozen dough system is provided with a aqueous water layer, optionally containing a thickener and/or a gelling agent and/or fat-component by spraying or brushing of water, optionally containing the thickener and/or a gelling agent and/or fat-component onto the frozen bakery dough system, or by dipping of the frozen bakery dough system, into water, optionally containing an amount of thickener and/or gelling agent and/or fat-component.

9. Process for the preparation of ready-to-bake frozen bakery dough systems, provided with a frozen aqueous layer, optionally containing a thickener and/or gelling agent and/or fat component, by making a ready-to-bake bakery dough system with the composition, mentioned in claims 1-4, and spraying or brushing of water, optionally containing a thickener, and/or gelling agent and/or fat component onto the dough-system obtained or dipping of the dough-system in water, optionally containing a thickener and/or gelling agent and/or fat component and quick freezing of the wetted dough-system so obtained.
